(19) Europäisches Patentamt / European Patent Office / Office européen des brevets

(11) **EP 2 510 391 B1**

(12) **FASCICULE DE BREVET EUROPEEN**

(45) Date de publication et mention de la délivrance du brevet:
**06.07.2016 Bulletin 2016/27**

(21) Numéro de dépôt: **10799076.4**

(22) Date de dépôt: **07.12.2010**

(51) Int Cl.:
***G02B 6/122*** *(2006.01)*

(86) Numéro de dépôt international:
**PCT/FR2010/000817**

(87) Numéro de publication internationale:
**WO 2011/070249 (16.06.2011 Gazette 2011/24)**

(54) **DISPOSITIF DE COUPLAGE D'UNE ONDE ÉLECTROMAGNÉTIQUE ENTRE UN GUIDE D'ONDE ET UN GUIDE MÉTALLIQUE À FENTE, PROCÉDÉ DE FABRICATION DUDIT DISPOSITIF, ET COUPLEUR OPTIQUE ET ÉLECTRIQUE D'UN OBJET UTILISANT LE DISPOSITIF DE COUPLAGE OPTIQUE**

VORRICHTUNG ZUR KOPPLUNG EINER ELEKTROMAGNETISCHEN WELLE ZWISCHEN EINEM WELLENLEITER UND EINER GERILLTEN METALLFÜHRUNG, VERFAHREN ZUR HERSTELLUNG DIESER VORRICHTUNG UND OPTISCHER ELEKTRISCHER KOPPLER FÜR EIN OBJEKT MIT DER OPTISCHEN KOPPLUNGSVORRICHTUNG

DEVICE FOR COUPLING AN ELECTROMAGNETIC WAVE BETWEEN A WAVE GUIDE AND A GROOVED METAL GUIDE, METHOD FOR MANUFACTURING SAID DEVICE, AND OPTICAL ELECTRIC COUPLER FOR AN OBJECT USING THE OPTICAL COUPLING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2009 FR 0905965**

(43) Date de publication de la demande:
**17.10.2012 Bulletin 2012/42**

(73) Titulaire: **Commissariat à l'Énergie Atomique et aux Énergies Alternatives 75015 Paris (FR)**

(72) Inventeurs:
• **DELACOUR, Cécile**
  **F-38000 Grenoble (FR)**

• **BEN BAKIR, Badhise**
  **F-38590 Brézins (FR)**
• **FEDELI, Jean-Marc**
  **F-38120 Saint-Egrève (FR)**
• **TCHELNOKOV, Alexei**
  **38240 Meylan (FR)**

(74) Mandataire: **Talbot, Alexandre Cabinet Hecké Europole 10, rue d'Arménie - BP 1537 38025 Grenoble Cedex 1 (FR)**

(56) Documents cités:
**EP-A1- 0 927 906      WO-A1-89/01171
US-A1- 2004 188 794    US-A1- 2005 249 451
US-B1- 6 178 275       US-B1- 6 408 123**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique de l'invention

L'invention est relative à un dispositif de couplage d'une onde électromagnétique comportant :

- un guide d'onde,
- un guide métallique à fente.

### État de la technique

La taille des composants électroniques est en constante diminution, permettant l'augmentation de la densité d'intégration de ces composants sur une même puce.

Dans le domaine de l'optoélectronique, il a été nécessaire de diminuer en conséquence la taille des guides d'onde pour accéder optiquement à ces composants avec une bonne efficacité. Sans précautions particulières, l'efficacité de couplage est sensiblement égale au rapport entre la surface du mode optique véhiculé par le guide d'onde et la surface caractéristique du dispositif à adresser.

La miniaturisation des circuits optiques a déjà conduit à une miniaturisation des guides optiques planaires, dont la section peut descendre jusqu'à des dimensions de l'ordre de 200nm par 400nm. Cependant, ces diminutions ne sont pas suffisantes lorsque l'on cherche à accéder, par exemple, à un nanofil de 50nm.

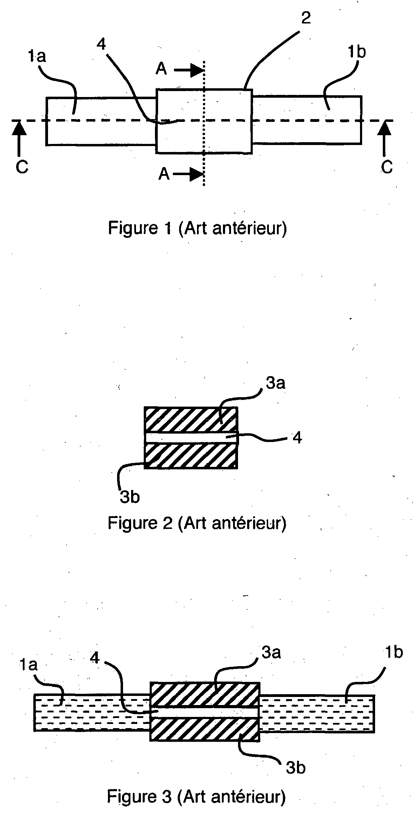

Le document « Theorical investigation of compact couplers between dielectric slab waveguides and two-dimensional metal-dielectric-metal plasmonic waveguides » publié dans « Optic Express » Vol. 15, No. 3 du 5 février 2007 décrit un dispositif de couplage d'une onde électromagnétique. Un tel dispositif, illustré aux figures 1, 2 et 3, utilise un guide en silicium en deux éléments 1 a, 1 b et un guide en argent 2 de type métal-diélectrique-métal interposé entre les deux éléments 1 a, 1 b. Les éléments 1 a, 1 b et le guide en argent 2 sont disposés bout-à-bout. Le guide de type métal-diélectrique-métal 2 est constitué par deux éléments 3a, 3b en argent séparés par une fente 4 comblée de diélectrique. La fente 4 ainsi délimitée est sensiblement coaxiale avec l'axe central des éléments formant le guide en silicium 1 a, 1 b, où l'amplitude du champ électromagnétique généré par l'onde est maximum. Un tel dispositif est complexe à fabriquer car il nécessite un ajustement parfait des différents éléments mis bout-à-bout. Cette structure forme un dispositif résonnant dont le taux de transmission est très sensible à la longueur d'onde incidente. De plus, un tel dispositif induit un problème de réflexion, en effet, une partie de l'onde incidente se déplace dans le guide silicium 1 a et est transmise dans le guide en argent 2 mais une autre est réfléchie. Ainsi, un tel couplage n'est pas satisfaisant car il induit une baisse significative de l'efficacité du couplage de l'onde électromagnétique.

### Objet de l'invention

Un objet de l'invention vise à réaliser un couplage compact et efficace entre un guide d'onde et un guide métallique à fente.

On tend vers cet objectif par les revendications annexées et plus particulièrement par le fait que le guide métallique à fente est formé par deux éléments métalliques coplanaires et espacés l'un de l'autre de sorte à délimiter la fente, et en ce que le guide métallique à fente est disposé dans un plan décalé par rapport au plan du guide d'onde et recouvre partiellement ledit guide d'onde, ledit guide d'onde et le guide à fente étant maintenus à distance l'un de l'autre par un diélectrique.

L'invention est aussi relative à un procédé de fabrication d'un dispositif de couplage caractérisé par les revendications 11-15.

L'invention est aussi relative à un coupleur électrique et optique revendiqué d'un objet, ledit coupleur comporte un dispositif de couplage optique et un élément de couplage électrique muni de deux électrodes disposées au niveau de la fente du guide à fente, ledit objet étant en contact avec au moins une des électrodes.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre un dispositif de couplage selon l'art antérieur.

La figure 2 illustre le dispositif de couplage de la figure 1 selon une coupe A-A.

La figure 3 illustre le dispositif de couplage de la figure 1 selon une coupe C-C.

La figure 4 illustre respectivement la propagation d'une composante TM et TE d'une onde électromagnétique dans un guide d'onde.

La figure 5 illustre une vue de dessus d'un mode de réalisation selon l'invention.

La figure 6 illustre une vue en coupe selon A-A de la figure 5.

La figure 7 illustre un autre mode de réalisation d'un dispositif selon l'invention.

La figure 8 illustre des courbes représentatives de l'évolution de l'indice effectif en fonction de la largeur d'un guide d'onde en silicium.

La figure 9 illustre un autre mode de réalisation de l'invention.

La figure 10 illustre une vue de côté du dispositif de la figure 9.

La figure 11 illustre un autre mode de réalisation de l'invention.

Les figures 12 à 16 illustrent un procédé de fabrication d'un dispositif selon l'invention.

Les figures 17 à 19 illustrent deux modes de réalisation d'un coupleur optique et électrique d'un objet.

## Description de modes préférentiels de réalisation

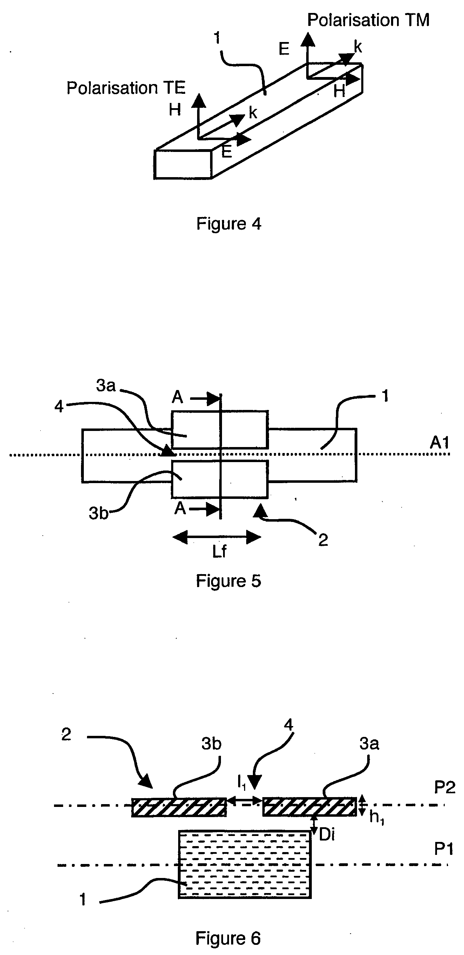

Comme illustré à la figure 4, lorsqu'une onde électromagnétique aussi appelée dans ce domaine onde optique (pour une gamme de longueur d'onde comprise du visible au proche et moyen infrarouge) se propage selon un axe longitudinal du guide d'onde 1 comme indiqué par le vecteur d'onde k, cette onde se décompose en deux états de polarisation. Un premier état forme une composante transverse électrique (TE « Transverse Electric » en anglais) et un second état forme une composante transverse magnétique (TM pour « Transverse Magnetic » en anglais). La composante TM comporte un champ électrique E perpendiculaire au plan du guide et un champ magnétique H parallèle au plan du guide. La composante TE comporte quant à elle un champ magnétique H perpendiculaire au plan du guide et un champ électrique E parallèle au plan du guide.

Comme illustré aux figures 5 et 6, le dispositif de couplage d'une onde électromagnétique (c'est-à-dire par exemple une onde optique telle que décrite précédemment) comporte un guide d'onde 1, par exemple formé par un guide en silicium, pouvant se présenter sous la forme d'un ruban. Un tel guide d'onde peut être un matériau de type III ou IV ou un alliage de ces types de matériaux tels que InP, GaS, InGaS. Avantageusement, le guide d'onde 1 est transparent à l'onde considérée. De manière générale, le guide d'onde 1 peut être un guide plan partiellement gravé (guide arrête) et/ou localement structuré pour contenir, par exemple des réseaux pour le couplage du guide d'onde 1 à une fibre optique. Le dispositif de couplage comporte en outre un guide métallique à fente 2, de préférence formé par deux éléments métalliques 3a, 3b coplanaires et espacés l'un de l'autre de manière à former ladite fente 4. À titre d'exemple, les éléments métalliques 3a, 3b peuvent être formés en argent ou en cuivre.

Le guide métallique à fente 2 est disposé dans un plan P2 décalé par rapport au plan P1 du guide d'onde 1 et recouvre partiellement ledit guide d'onde 1 (figure 6). Ce recouvrement permet l'interaction des champs évanescents des deux guides pour réaliser le couplage. De préférence, les deux guides 1, 2 sont maintenus à distance l'un de l'autre par un diélectrique permettant de limiter la réflexion, la diffusion ou l'absorption de l'onde. Autrement dit, le guide d'onde 1 et le guide métallique à fente 2 peuvent être séparés par un intervalle $D_i$. Le diélectrique peut se présenter sous la forme d'une couche d'une part en contact avec le guide d'onde 1, et d'autre part en contact avec le guide métallique à fente 2, il peut donc avoir une épaisseur égale à Di. Ce diélectrique peut être une couche d'oxyde de silicium. Plus généralement, le matériau diélectrique utilisé peut avoir un faible indice de réfraction par rapport à l'indice de réfraction du guide silicium. De préférence, cet indice de réfraction est compris entre 1 et 2,5, et permet de confiner au mieux l'onde optique dans le guide d'onde 1 pour éviter que cette dernière diffuse à l'extérieur dudit guide d'onde 1. Le guide d'onde peut avoir, à titre d'exemple, un indice de l'ordre de 3,55.

Lorsqu'une onde électromagnétique se propage dans un guide, une partie de cette onde pénètre dans le milieu environnant, générant ainsi un champ dit évanescent. Cette longueur de pénétration est proportionnelle au rapport d'indices de réfraction du guide et de son milieu environnant. Grâce au couplage d'un guide d'onde 1 avec un guide métallique à fente 2 tel que décrit, le champ évanescent du guide d'onde peut être progressivement accumulé par le guide métallique à fente 2 quand les deux guides sont proches l'un de l'autre. Ce processus est également réciproque.

Dans un mode de réalisation illustré aux figures 5 et 6, le guide d'onde 1 est constitué par un seul élément formant un ruban, de préférence en silicium. Le guide à fente 2 métallique, par exemple en argent, est formé par deux éléments métalliques 3a, 3b, coplanaires, et espacés l'un de l'autre de manière à délimiter ladite fente 4. La fente 4 est, de préférence, orientée selon un axe longitudinal A1 du guide d'onde 1. De préférence, la fente 4 est centrée de sorte qu'elle soit comprise dans un plan perpendiculaire au plan du guide d'onde 1 et passant par son centre, l'intersection des deux plans forme alors l'axe longitudinal A1 du guide d'onde 1. La vue de la figure 5 étant une vue de dessus du dispositif de couplage, le guide métallique à fente 2 est disposé au dessus du guide d'onde 1 de sorte que le guide métallique à fente 2 recouvre partiellement le guide d'onde 1. Le mode de réalisation des figures 5 et 6 et n'est pas limitatif, ainsi de manière générale, le guide métallique à fente 2 et le guide d'onde 1 peuvent être sensiblement désorientés et décentrés.

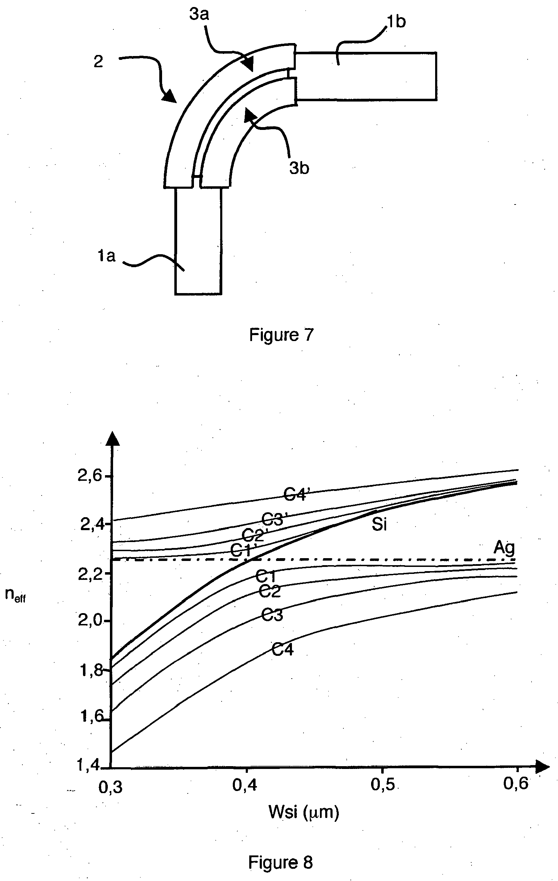

Selon une variante de réalisation illustrée à la figure 7, le guide d'onde 1 est constitué de deux éléments 1 a et 1 b qui ne sont pas réalisés sur un même axe, le guide métallique à fente 2 est alors courbé pour relier les deux éléments 1a et 1b. Sur la figure 7, les deux éléments 1a et 1b sont espacés l'un de l'autre et leurs axes longitudinaux sont perpendiculaires.

Selon un mode particulier de réalisation le champ électromagnétique dans le guide à fente étant transverse, seuls les modes propres du guide d'onde 1 polarisés TE sont couplés, c'est-à-dire que seule la composante TE se propage dans le guide à fente 2 tandis que la composante TM reste cantonnée au guide d'onde 1. Ainsi, le dispositif de couplage est aussi appelé coupleur co-directionnel.

Dans l'exemple de réalisation à base de guide d'onde 1 en silicium et de guide métallique à fente 2 en argent, le couplage est réalisé entre les modes fondamentaux (de plus haut indice effectif) TE des deux guides, ce mode couplé au guide métallique à fente 2 permet un confinement du couplage dans la fente dudit guide à fente 2. La densité de puissance obtenue dans le guide à fente 2 est alors exacerbée de l'ordre de 100.

L'utilisation des champs évanescents permet d'augmenter l'efficacité du couplage par rapport au couplage bout-à-bout de l'art antérieur. Le mécanisme de couplage entre le guide d'onde 1 et le guide métallique à fente 2 peut être illustré à l'aide d'équations obtenues dans une approche perturbative des équations de Maxwell, pour un système simplifié où les deux guides sont identiques. Ces équations seront suffisantes pour traduire la propagation de l'onde dans un système couplé et les paramètres qui influencent ce couplage. Une description approfondie est effectuée par A. Yariv dans « coupled mode theory for guided wave optics », IEEEJ. Quant. Elec. 9, 919, 1973.

Le guide d'onde 1 et le guide métallique à fente 2 peuvent être mono-mode ou multi-modes en fonction de la largeur et/ou de la hauteur du guide d'onde 1 et de la largeur et/ou de l'épaisseur (ou hauteur) des éléments métalliques 3a, 3b du guide métallique à fente 2. Il est aussi possible de jouer sur la largeur de la fente pour faire une sélection de mode(s) à coupler et former ainsi un filtre de mode(s). Selon un développement, un mode du guide d'onde 1 et un mode du guide métallique à fente 2 ont un même indice effectif et sont couplés. Un mode correspond à une configuration spatiale du champ électromagnétique induit par la propagation d'une onde électromagnétique dans le guide associé audit mode. Selon la répartition du champ électromagnétique, un mode donné voit un indice différent des matériaux constituant le guide et l'indice vu par chaque mode défini un indice effectif. Un indice effectif peut être défini comme le rapport de la longueur d'onde dans le vide sur la longueur d'onde dans le milieu à traverser.

L'efficacité de couplage optimal ($F$) est définie comme étant la fraction de puissance transmise d'un premier guide vers un second guide au bout d'une distance caractéristique $L_c$ aussi appelée longueur de couplage effectif:

$$F = \frac{1}{1 + \left(\dfrac{\Delta n_{eff,L}}{\Delta n_{eff,S}}\right)^2} \quad (1),$$

avec

$$L_c = \frac{\lambda}{2\sqrt{\Delta n_{eff,S}^2 + \Delta n_{eff,L}^2}} \quad (2),$$

où, $\lambda$ est la longueur d'onde d'opération (onde se déplaçant dans le dispositif de couplage),

$\Delta n_{eff,L}$ est la différence entre les indices effectifs des modes supportés par les guides en l'absence de couplage. Ces modes sont appelés modes locaux.

$\Delta n_{eff,S}$ : est la différence entre les indices effectifs des modes (appelés supermodes) supportés par la structure de couplage comprenant les deux guides juxtaposés (guide d'onde et guide métallique à fente). Ces deux supermodes sont par construction de symétrie opposée. On parle alors de supermodes symétrique et antisymétrique. Cette quantité physique est dépendante de l'intervalle Di qui sépare les deux guides. Cette distance Di conditionne la longueur de couplage $L_c$ ainsi que le taux de puissance transférée.

Le transfert de puissance d'un guide à l'autre est un processus harmonique et donc réversible. En considérant une puissance nominale $P_0$ injectée dans le guide d'onde 1, la puissance collectée ou transmise dans le guide métallique à fente 2 à la position z s'exprime de la façon suivante :

$$P_{1 \to 2}(z) = P_0 \cdot F \sin^2\left(\frac{\pi}{2L_c} \cdot z\right) \quad (3)$$

D'après la relation (3), le transfert de puissance du premier guide vers le second guide est optimal pour des multiples impairs de la longueur caractéristique de couplage $L_c$.

L'efficacité du couplage peut être perfectionnée en fonction de la distance séparant le guide d'onde 1 et le guide métallique à fente 2, de leurs indices effectifs, de la longueur du guide métallique à fente 2 ou encore la longueur de recouvrement partielle entre les guides.

Ainsi, selon un premier perfectionnement, il est préférable d'utiliser deux guides 1, 2 dont les indices effectifs $n_{eff}$, des modes non couplés, sont sensiblement égaux de sorte que le terme F de l'équation (1) tende vers l'unité. De préférence, le rapport de l'indice effectif du guide d'onde 1 avec l'indice effectif du guide métallique à fente 2 est compris entre 0,8 et 1,2, et préférentiellement égal à 1. L'indice effectif d'un mode peut varier en fonction des dimensions (largeur et épaisseur) du guide considéré, une telle variation est décrite dans « Silicon photonics » Reed, G.T., Knights, A.P., ed. Wiley (2004). Afin de permettre une interaction optimale des modes du guide d'onde 1 et du guide métallique à fente 2, il est possible de fixer l'indice effectif d'un premier guide, puis d'ajuster les dimensions géométriques d'un second guide à coupler avec le premier pour obtenir un accord d'indice effectif entre les modes propres de chacun des guides.

Dans l'exemple, l'indice effectif des modes supportés par ces guides peut être calculé numériquement par un solveur de mode en utilisant la méthode FDTD (pour finite-difference frequency-domain en anglais). Dans cet exemple particulier, la géométrie, et donc l'indice effectif $n_{eff}$, du guide à fente 2 est fixée. Les dimensions du guide d'onde 1 en silicium vont être caractérisées en fixant, par exemple, sa hauteur, et en faisant varier sa largueur pour obtenir un indice effectif sensiblement égal à celui du guide métallique à fente 2. L'indice effectif du guide métallique à fente 2 dépend de la largeur $l_1$ de la fente 4, de la hauteur $h_1$ de la fente 4 (figure 6) et du type de matériau utilisé. Selon l'exemple, le guide métallique à fente 2 est réalisé en argent, la largeur $l_1$ de la fente 4 est de 25nm et la hauteur $h_1$ de la fente 4 est de 50nm, l'indice effectif d'un tel guide est fixé à 2,25 à la figure 8 (courbe Ag). Sur cette figure 8, une courbe Si est aussi reportée, cette courbe illustre l'évolution de l'indice effectif $n_{eff}$ du guide silicium par rapport à sa largeur Wsi. Dès lors, la figure 8 permet de déterminer un point de croisement des courbes Ag et Si où les indices effectifs des deux guides sont égaux. Ainsi, pour le guide métallique à fente 2 en argent précédemment décrit, la largeur préférentielle du guide en silicium associé est de 410nm.

Dans cet exemple particulier, la largeur du guide d'onde en silicium 1 dépend donc de l'indice effectif du guide métallique à fente 2. Cette largeur du guide silicium 1 sera différente si l'on change le métal du guide à fente ou si les dimensions de la fente 4 varient.

Selon un deuxième perfectionnement, l'intervalle Di séparant les deux guides 1, 2 est ajusté pour optimiser la longueur et l'efficacité de couplage. Dans le cas particulier où les indices effectifs des deux guides lorsque ces derniers ne sont pas couplés sont rigoureusement identiques, l'équation (1) est égale à un et l'intervalle Di influe uniquement sur la longueur de couplage Lc et donc sur la compacité du dispositif.

Selon l'exemple particulier utilisant un guide 1 ruban en silicium et un guide 2 en argent à fente, il a été réalisé quatre dispositifs de test chacun associé à un intervalle Di de séparation de 250nm, 150nm, 100nm, et 50nm. Le graphique de la figure 8 illustre les variations des indices effectifs des supermodes pair et impair de la structure en fonction de la largeur du guide en silicium. Les courbes C1, C2, C3, C4 sont respectivement associées aux distances 250nm, 150nm, 100nm, et 50nm dans le supermode impair et les courbes C1', C2', C3', C4' sont respectivement associées aux distances 250nm, 150nm, 100nm, et 50nm dans le supermode pair. La lecture du graphique obtenu à la figure 8 permet de déterminer que plus les guides sont proches, plus l'écart d'indice effectif entre les supermodes pair et impair est important au point de croisement.

En effet, au point de croisement de la courbe Ag et Si, la constante de couplage est d'autant plus grande que l'écart d'indice effectif entre les supermodes pair et impair est important, en accord avec la relation précédente (1). Un intervalle Di faible, équivalent à un écart d'indice effectif des supermodes grand, est donc préférable pour augmenter l'efficacité du couplage. Or, plus l'écart d'indice effectif est important, plus la force ou puissance de couplage augmente. Un intervalle faible est donc préférable pour augmenter l'efficacité du couplage.

De préférence, l'intervalle Di séparant les deux guides a un minimum de 10nm et un maximum de l'ordre de la longueur d'onde de travail ou d'opération, c'est-à-dire fonction de la longueur de l'onde que l'on cherche à coupler. En effet, sans décalage, l'intervalle de séparation pourrait être nul et les guides en contact. Un tel contact entre les deux guides génèrerait une diffraction de l'onde électromagnétique, et donc une perte de l'efficacité du couplage. De plus, la mise en contact du guide métallique à fente 2 avec le guide d'onde 1 en silicium 1 risquerait de contaminer les propriétés optiques par migration des espèces métalliques dans le guide en silicium.

Selon un troisième perfectionnement, la longueur de recouvrement partiel $L_r$ du guide d'onde 1 par le guide métallique à fente 2 est un multiple impair d'une longueur de couplage effectif Lc (équation (2)) entre les deux guides 1, 2. La longueur de couplage effectif Lc est définie comme étant la longueur la plus courte pour laquelle la puissance injectée dans le guide d'onde 1 est maximale dans le guide métallique à fente 2. Ce transfert de puissance dans le guide métallique à fente 2 est périodique, ladite période étant de $L_b = 2L_c$, $L_b$ étant aussi appelée longueur de battement.

Ainsi, la longueur de recouvrement sera de préférence égale à la longueur de couplage ou plus généralement à un multiple impair $(2n+1)*Lc$ pour transmettre l'onde électromagnétique d'un guide à l'autre, avec n un entier positif ou nul.

L'utilisation d'un guide métallique à fente 2 dont la longueur totale est égale à la longueur de recouvrement qui est un multiple impair de la longueur de couplage Lc permet avantageusement de confiner la composante TE dans le guide métallique à fente 2. Dès lors, la composante TE se retrouve dans le guide à fente 2 et la composante TM continue de se propager dans le guide d'onde 1.

La longueur de couplage et l'efficacité du couplage peuvent aussi être optimisées par une étude paramétrique réalisée à l'aide de simulations numériques en utilisant par exemple la méthode FDTD (finite-difference frequency-domain en anglais). Cette méthode numérique est utilisée pour simuler la propagation des ondes électromagnétique dans les structures. Le mode opératoire de l'exemple utilise un faisceau gaussien généré dans le guide ruban 1 en silicium et se propageant selon k. Là longueur d'onde de travail a été choisie autour de 1550nm. Selon l'exemple particulier du guide à fente 2 en argent et du guide silicium 1, la longueur de couplage Lc pour laquelle 75% de puissance est transmise au guide métallique à fente 2 est égale à $0,9\mu m$. Elle traduit une grande différence d'indice des deux supermodes, c'est-à-dire une grande force de couplage qui en conséquence permet une forte compacité du dispositif. Cette caractéristique signifie aussi que le déphasage entre les deux supermodes, autrement dit le couplage, sera donc peu sensible à la longueur d'onde et aux dimensions géométriques des guides (grande tolérance de fabrication).

Bien entendu, les différents perfectionnements cités ci-dessus peuvent être utilisés en combinaison, leur synergie permet d'obtenir une efficacité optimale du dispositif de couplage

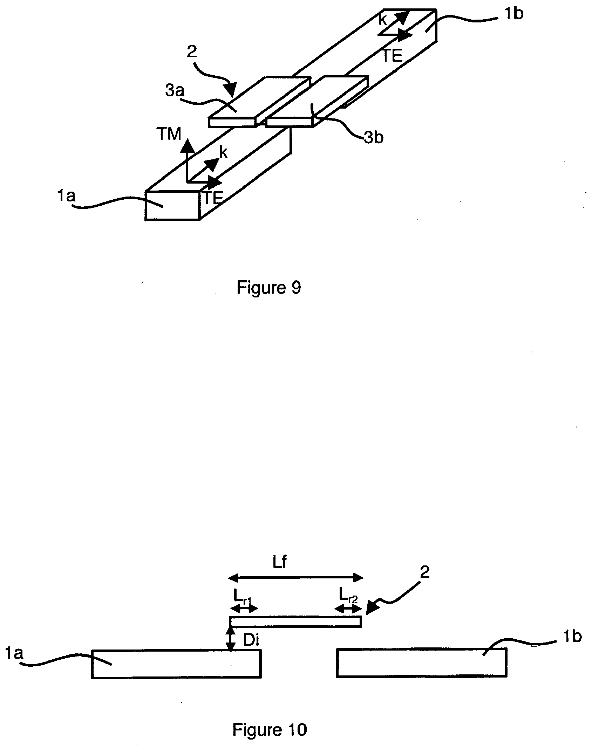

Selon un mode de réalisation particulier illustré aux figures 9 et 10, le guide d'onde est formé par deux éléments 1 a, 1b, de préférence alignés selon un même axe. Le guide métallique à fente 2 est disposé de manière à recouvrir partiellement deux portions proximales 1 a, 1 b desdits éléments sur des longueurs de recouvrement $L_{r1}$ et $L_{r2}$. Ceci permet de réaliser selon le sens k de propagation de l'onde électromagnétique un premier couplage entre l'élément 1a du guide d'onde et le guide métallique à fente 2, puis un second couplage entre le guide métallique à fente 2 et l'élément 1 b du guide d'onde. Selon un mode de réalisation, seules les composantes TE traversent le guide à fente, ces dernières sont les seules à être couplées lors du second couplage. De préférence, les longueurs de recouvrement $L_{r1}$ et $L_{r2}$ du guide d'onde par le guide à fente 2 au niveau de chaque portion d'élément 1 a, 1 b sont respectivement égales à un multiple impair de la longueur de couplage effectif $L_c$. Les méthodes de détermination de la longueur de couplage effectif $L_c$ précédemment décrites s'appliquent à ce mode de réalisation.

Lorsque le guide d'onde est formé par deux éléments 1 a, 1b, les deux portions proximales peuvent optionnellement être amincies pour réduire la section du guide d'onde de sorte que le signal non couplé au guide métallique à fente 2 ne soit pas réfléchi par le bout du guide d'onde.

Le dispositif de couplage, et ses modes de réalisation, peut, en plus de permettre le couplage des deux guides, être utilisé pour réaliser des composants optoélectroniques (détecteurs, émetteurs, composants d'optiques non linéaires) en fonction de la nature du milieu constituant la fente du guide métallique à fente 2. En effet, un tel couplage permet d'exacerber l'interaction lumière-matière par le confinement dans la fente pour rendre les dispositifs plus performants (sensibilité, efficacité, non-linéarité). L'utilisation d'un guide métallique à fente 2 permet selon les applications d'utiliser les deux éléments métalliques 3a, 3b le constituant comme des électrodes pour, par exemple, détecter ou appliquer une différence de tension aux bornes de ladite fente. L'application d'une tension permet, par exemple, de moduler l'indice du matériau (par exemple SiOx) contenu dans la fente, c'est-à-dire entre les deux éléments métalliques 3a, 3b coplanaires.

Une autre application peut être la détection ou l'émission stimulée d'objets sub-microniques tels que des nano-fils, nano-antennes, boîtes quantiques, etc. En effet, les composantes TE de l'onde électromagnétique confinées dans le guide à fente 2 peuvent converger plus facilement vers un objet de quelques nanomètres placé dans ladite fente. Comme précédemment, les éléments métalliques 3a, 3b du guide à fente 2 peuvent former des électrodes aptes à appliquer un stimulus ou à mesurer des valeurs.

De manière générale, fente peut aussi être remplie par un matériau présentant des propriété optiques particulières telles que la non linéarité avec des matériaux du type SiOx (silice chargée en nanocristaux de silicium) ou du type polymère. Le matériau peut aussi avoir des propriétés d'émission et être de type SiOx (silice chargée en nanocristaux de silicium) dopé avec des ions Erbium ou de la famille III-V (AsGa ou InP). Le matériau peut aussi avoir des propriétés de modulation et être du type BST ou PZT (matériaux ferroélectriques qui possèdent des propriétés piezo-électriques). Autrement dit, la fente peut être comblée par un matériau non linéaire, un matériau à propriétés d'émission ou un matériau à propriétés de modulation.

Dans une variante, il est possible de remplir la fente 4 avec du germanium ou de la silice chargée de nanocristaux de silicium et de se servir des éléments métalliques 3a, 3b pour appliquer une tension au matériau comblant la fente pour le rendre plus ou moins transparent. Ceci permet par exemple de former des filtres de modulation d'amplitude ou de phase de l'onde considérée.

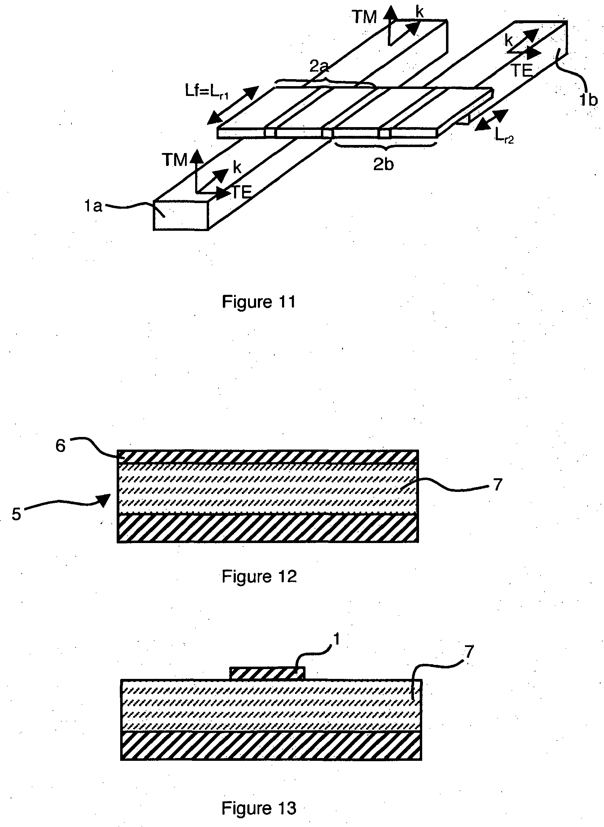

Une autre application peut être la séparation des ondes TE et TM dans deux guides d'onde 1 a, 1 b. Un dispositif utilisant l'invention pour réaliser une telle fonction est illustré à la figure 11. Un tel dispositif de séparation comporte un premier guide d'onde 1 a couplé à un premier guide métallique à fente 2a. La longueur de recouvrement $L_{r1}$ du premier guide métallique à fente 2a sur le premier guide d'onde 1 a est un multiple impair de la longueur de couplage, permettant ainsi de confiner la composante TE dans le premier guide métallique à fente 2a. Dans le cas particulier de la figure 11, le guide d'onde 1 a est continu et la longueur de recouvrement $L_{r1}$ est égale à la longueur Lf du premier guide métallique à fente 2a. Selon l'axe k de déplacement de l'onde électromagnétique dans le premier guide d'onde 1a, seule la composante TM est présente après le premier guide métallique à fente 2a car cette dernière n'a pas été couplée. Le premier guide à fente 2a est couplé à un second guide à fente 2b lui-même couplé à un second guide d'onde 1 b. La longueur de recouvrement $L_{r2}$ du second guide d'onde par le guide à fente est, de préférence, égale à un multiple impair de la longueur de couplage Lc pour permettre le transfert de la composante TE dans le second guide d'onde 1 b.

A titre d'exemple de réalisation, l'onde électromagnétique peut être amenée dans le dispositif de couplage par une fibre optique soit par la méthode réseau, soit par la méthode taper.

Dans la méthode réseau, le guide d'onde 1 comporte une pluralité de nervures à sa surface, chaque nervure étant, de préférence, perpendiculaire à l'axe longitudinal du guide d'onde. La fibre optique est orientée dans une direction proche de la normale au plan contenant les nervures, c'est-à-dire au plan du guide.

Dans la méthode « taper » le guide d'onde 1 comporte, par exemple, une extrémité divergente ou convergente (taper inversé) mise en aboutement avec la fibre optique dans le plan des guides. Une telle réalisation est décrite dans le document « IEEE photonics technologiy letters » Volume 17 n° 12 de Roelkens et al.

Un procédé de réalisation d'un dispositif de couplage illustré aux figures 12 à 16 comporte, sur un substrat, les étapes successives suivantes :

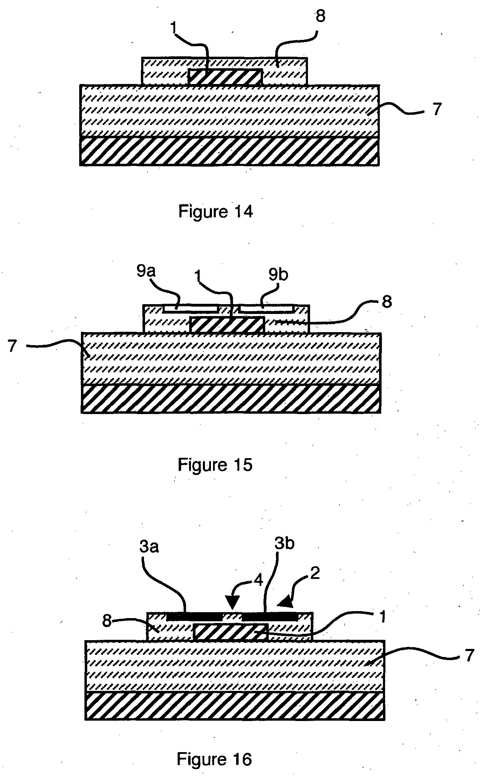

- former un guide d'onde 1 (figures 12 et 13),
- former un guide métallique à fente 2 (figures 15 et 16) dans un plan décalé par rapport au plan du guide d'onde 1 de sorte que le guide métallique à fente recouvre partiellement le guide d'onde 1 et que la fente 4 soit délimitée par deux éléments métalliques 3a, 3b coplanaires. De préférence, la fente 4 du guide à fente 2 est orientée selon un axe longitudinal A1 du guide d'onde. Comme indiqué précédemment, le décalage peut être réalisé par l'intermédiaire d'un matériau diélectrique.

Selon un développement, après formation du guide d'onde 1, ce dernier est encapsulé ou recouvert en partie, avant la formation du guide à fente 2, par un matériau diélectrique 8 de faible indice de réfraction par rapport à l'indice de réfraction du guide d'onde 1, ce matériau diélectrique 8 est de préférence de l'oxyde de silicium (figure 14). Par faible indice, on entend un matériau dont l'indice de réfraction est compris entre 1 et 2,5. Cette encapsulation permet notamment de décaler les deux guides l'un de l'autre et de participer à la formation du guide métallique à fente 2.

De préférence, le dispositif de couplage peut être avantageusement réalisé comme illustré à la figure 12 à partir d'un substrat 5 de type SOI (silicium 6 sur isolant 7). Ainsi, l'étape de formation du guide d'onde 1 est réalisée par gravure partielle ou totale de la couche supérieure 6 de silicium. Par gravure totale, on entend la gravure de la couche supérieure de silicium 6 jusqu'à la couche d'isolant 7 pour former le guide d'onde 1 en silicium. Une gravure partielle permet, par exemple, de former des nervures pour le couplage à une fibre optique comme décrit précédemment.

Selon une variante, la formation du guide métallique à fente 2 est réalisée par les étapes successives suivantes :

- graver deux cavités 9a, 9b dans le matériau diélectrique 8 (figure 15) encapsulant ou recouvrant en partie le guide d'onde 1, à ce stade, les deux cavités 9a, 9b sont séparées par une paroi délimitant la largeur maximum et la hauteur maximum de la fente,
- remplir les deux cavités par du métal, de préférence de l'argent ou du cuivre (figure 16), l'épaisseur de métal déposée définissant la hauteur de la fente.

Il est aussi possible d'encapsuler le guide d'onde 1 puis de réaliser sur l'encapsulation une couche ayant des propriétés optiques particulières tel que défini précédemment (émission, modulation, non-linéarité). De préférence, cette couche sera du germanium ou de la silice chargée en nanocristaux. Les cavités pourront alors être réalisées dans cette dernière couche et la fente sera automatiquement comblée par le matériau correspondant.

De préférence, le guide à fente 2 est réalisé par la méthode Damascène, c'est-à-dire que le diélectrique 8 encapsulant ou recouvrant en partie le guide d'onde 1 est gravé partiellement ou totalement au-dessus du guide d'onde 1 pour réaliser des cavités de dimensions égales aux dimensions des éléments métalliques 3a, 3b et pour délimiter la fente 4 du guide à fente. Le métal peut ensuite être déposé sur tout le substrat avant qu'un polissage ne vienne, de préférence, retirer tout le métal présent en dehors desdites cavités 9a, 9b. Dans le cas où il y a gravure totale, les éléments métalliques 3a, 3b se retrouvent en contact avec le guide d'onde 1. Dans le cas particulier précédemment décrit où le procédé comporte une couche supplémentaire ayant des propriétés optiques particulières, cette dernière peut être gravée jusqu'au diélectrique 8 et les élément métalliques 3a, 3b sont alors en contact avec le diélectrique 8.

Ainsi, le matériau dans la fente, c'est-à-dire séparant les deux éléments 3a, 3b formant le guide métallique à fente 2 peut être différent de celui qui encapsule le guide d'onde 1 ou recouvre partiellement le guide d'onde 1. Le matériau peut aussi être retiré après formation des éléments métalliques 3a, 3b pour laisser libre la fente.

La méthode Damascène présente l'avantage de permettre la réalisation d'une fente 4 entre les deux éléments métalliques 3a, 3b, de préférence en cuivre et/ou argent, dont les bords sont plus abrupts et moins rugueux que ceux obtenus par une gravure directe des métaux. De préférence, le métal utilisé pour former les éléments métalliques 3a, 3b est un métal ayant un faible indice de réfraction. Ceci permet d'améliorer le fonctionnement du guide métallique à fente en diminuant les pertes de dissipation pouvant être causées par la rugosité de la fente. Cette méthode permet aussi l'utilisation de matériaux dont la gravure directe n'est pas facilement reproductible comme par exemple le cuivre.

Selon un mode de réalisation, le procédé comporte entre l'étape de gravure des cavités 9a, 9b et l'étape de remplissage des cavités 9a, 9b une étape d'attaque chimique au niveau desdites cavités 9a, 9b pour permettre l'amincissement de la paroi définissant les dimensions de la fente.

Il est ainsi possible de réaliser une fente dont la largeur peut être comprise entre 10nm et 100nm grâce à une lithographie optique (DUV).

Selon un mode de réalisation particulier, après l'étape de remplissage des cavités pour former le guide à fente, une étape d'attaque chimique sélective du matériau situé entre les deux éléments métalliques est réalisée afin de permettre le remplissage de la fente par un autre matériau différent de celui encapsulant le guide d'onde 1.

Une des applications de ce mode de réalisation est la détection de particules. Ces dernières peuvent être piégées dans la fente mise à l'air, de préférence par un système micro-fluidique, pour modifier la constante de propagation de l'onde électromagnétique dans ledit guide à fente et ainsi l'efficacité du couplage au guide d'onde. La variation de l'efficacité permet alors de détecter certaines particules.

Afin de protéger le guide à fente 2, il est possible de l'encapsuler par un diélectrique de faible indice de réfraction, par exemple de l'oxyde de silicium. Un tel indice de réfraction peut être compris entre 1 et 2,5

Le dispositif de couplage est, de préférence, réalisé à base de métaux non contaminants (cuivre, aluminium, etc.) pour pouvoir utiliser les mêmes moyens de fabrication que ceux utilisés dans les domaines de la microélectronique et la photonique sur silicium.

Le dispositif de couplage décrit ci-dessus peut servir de brique élémentaire dans un circuit optique et permet de réaliser des interconnexions optiques à des distances très faibles. Il présente l'avantage d'une très bonne efficacité et d'une compacité élevée.

Selon une approche, on cherchera à utiliser le dispositif de couplage pour former un coupleur optique et électrique d'un objet, par exemple une molécule de préférence de dimensions nanométriques. En effet, l'utilisation d'un guide à fente en couche mince, par exemple de l'ordre de 50nm d'épaisseur permet d'adresser des objets de dimensions nanométriques. Un tel coupleur permet notamment de relier les propriétés de transport électrique de l'objet à ses propriétés optiques. Des exemples d'application peuvent être la spectroscopie moléculaire pour étudier les états électroniques d'un objet inconnu. Pour un objet connu, il est possible de moduler par voie optique la conductance de l'objet, et de réaliser ainsi un transistor moléculaire contrôlé par une grille optique. L'invention peut aussi être utile pour coupler la luminescence d'un objet vers un guide d'onde silicium.

Une solution à cette approche est de combiner un couplage optique tel que décrit en utilisant un guide d'onde, et un guide à fente combiné à un couplage électrique.

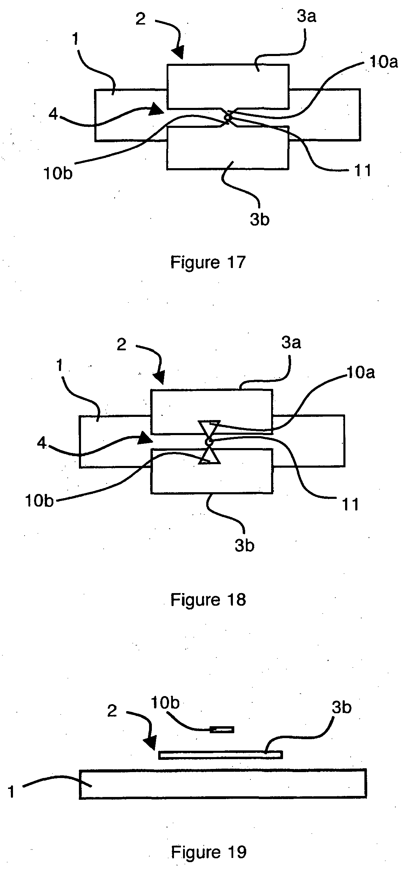

Comme illustré aux figures 17 à 19, un coupleur optique et électrique comporte un dispositif de couplage tel que décrit précédemment, selon ses différents modes de réalisation et variantes, et un élément de couplage électrique muni de deux électrodes disposées au niveau de la fente du guide à fente 2. L'objet est, de préférence, en contact avec au moins une des électrodes. Bien entendu, le guide à fente 2 est couplé optiquement au guide d'onde 1. L'objet 11 peut aussi être en contact avec les deux électrodes, dans les deux cas l'objet en contact électrique avec la ou les électrodes peut alors être adressé électriquement.

Les électrodes comportent, de préférence, deux micropointes 10a, 10b, de préférence métalliques, placées en regard l'une de l'autre, l'une des micropointes 10a étant orientée vers l'autre micropointe 10b. Les micropointes permettent d'adresser des objets de dimensions inférieures à la fente. Pour des objets plus grands que la fente (nanofils, nanotubes graphène, etc.) les électrodes pourront avoir une forme quelconque.

En fait, le bout aigu d'une micropointe 10a, 10b est proximal au bout aigu de l'autre micropointe. L'objet 11 peut être en contact électrique avec l'une des micropointes 10a, 10b, au niveau de son bout aigu, ou être enserré électriquement par les deux micropointes 10a, 10b (figures 17 et 18). De manière plus générale, l'objet 11 est en contact électrique avec au moins une des électrodes.

Selon un premier mode de réalisation du coupleur illustré à la figure 17, les électrodes sont formées par les éléments métalliques 3a, 3b du guide à fente 2, et chacun des éléments métalliques 3a, 3b comporte au niveau de la fente les séparant une micropointe, l'une des micropointes 10a, 10b étant orientée vers l'autre micropointe. Les micropointes 10a, 10b sont utiles pour coupler des molécules nanométriques.

En fait, les deux élément métalliques 3a, 3b peuvent comporter deux bords se faisant face et délimitant la fente, une micropointe peut être réalisée sur un des bords qui forme localement une saillie en direction d'une saillie sensiblement identique de l'autre bord. Autrement dit, les micropointes 10a, 10b sont disposées dans la fente, chacun des éléments métalliques 3a, 3b comporte alors dans la fente les séparant une micropointe 10a, 10b, l'une des micropointes étant orientée vers l'autre micropointe. Dans ce cas, le guide à fente 2 permet d'une part de coupler optiquement l'onde à l'objet 11, et d'autre part de coupler électriquement l'objet 11, par exemple en reliant les deux éléments métalliques 3a, 3b à une électronique de mesure et/ou de polarisation.

Selon un second mode de réalisation illustré aux figures 18 à 19, les éléments métalliques 3a, 3b du guide à fente 2 sont situés entre le guide d'onde 1 et les électrodes, comportant de préférences des micropointes 10a, 10b. Contrairement au mode ci-dessus, les électrodes sont alors distinctes des éléments métalliques 3a, 3b mais restent au niveau, c'est-à-dire à proximité de la fente. Lesdites électrodes peuvent être situées entre 0nm et 500nm des éléments métalliques 3a, 3b, et de manière générale jusqu'à la moitié de la longueur d'onde incidente, et de préférence à une distance minimale supérieure à la largeur de la fente. Autrement dit, les électrodes sont situées dans un plan décalé du plan des éléments métalliques 3a, 3b, et sont disposées de préférence au-dessus de la fente 4. En fait, dans ce second mode de réalisation, les électrodes sont distinctes des éléments métalliques 3a, 3b. De préférence, dans le second mode de réalisation, les électrodes sont séparées des éléments métalliques 3a, 3b par une couche d'un matériau diélectrique, par exemple de l'oxyde de silicium, de faible indice par rapport au guide d'onde 1, typiquement l'indice de réfraction du matériau diélectrique est compris entre 1 et 2,5. Le second mode de réalisation présente l'avantage de ne pas gêner le couplage optique du guide d'onde 1 avec le guide à fente 2 par rapport au premier mode de réalisation du coupleur.

L'épaisseur des électrodes du second mode de réalisation dans une direction perpendiculaire au plan du guide d'onde peut être comprise entre quelques nanomètres au niveau d'une zone destinée au couplage électrique d'objets de taille nanométrique (molécules), et une centaine de nanomètres au niveau d'une zone de reprise de contacts pour faciliter ladite reprise de contact électrique. Autrement dit, chaque électrode peut comporter une zone de couplage électrique (adressant l'objet) dont l'épaisseur est inférieure à une zone de reprise de contact des électrodes. Bien entendu, dans le premier mode de réalisation du coupleur, l'épaisseur des électrodes est égale à l'épaisseur des éléments métalliques 3a, 3b. En fait, une fine épaisseur au niveau des électrodes permet de contacter un objet de taille nanométrique (par exemple une molécule). Pour des grands objets comme des nanofils, nanotubes, graphène, plus le contact au niveau de la zone de couplage sera épais plus il sera meilleur.

Dans les deux modes de réalisation du coupleur comportant les micropointes 10a, 10b, ces dernières sont, de préférence, situées au niveau de la médiane de la fente, ladite médiane étant perpendiculaire à l'axe longitudinal de la fente. Ceci permet notamment de diminuer la surface des électrodes contenues dans, ou à proximité de la fente pour perturber au minimum la propagation du signal lumineux. L'espacement entre les deux électrodes (par exemple via les micropointes) est, de préférence, inférieure à 200nm. Pour des objets plus grands que la fente, les électrodes peuvent être décalées l'une de l'autre, et peuvent être espacées d'une dimension plus grande que celle de la largeur de la fente.

Afin de réaliser un espacement entre les micropointes inférieur à 30nm, ces dernières peuvent être obtenues en formant des électrodes en contact électrique séparées par un pont relativement fin (par exemple une dizaine de nanomètres d'épaisseur, et d'environ 50nmx100nm de dimensions latérales). Ensuite ces électrodes peuvent être polarisées en courant de sorte à casser le pont, et espacer les deux électrodes par un gap nanométrique. Il peut aussi être envisagé d'appliquer des contraintes mécaniques au pont pour le rompre et délimiter les micropointes. Pour des espacement supérieurs à 30nm, il sera utilisé des techniques de lithographie/gravure.

De préférence, les micropointes 10a, 10b et les éléments métalliques 3a, 3b du guide à fente 2 sont réalisés dans des matériaux différentes pour assurer un bon contact ohmique des pointes avec l'objet. En général, les micropointes sont formées par des multicouches métalliques comme par exemple l'Al ou l'Au.

L'objet 11 peut être un objet de taille nanométrique comme un nanotube, du graphène, ou une boîte quantique dont la croissance puis le dépôt peuvent être réalisés de sorte à mettre en contact ladite boîte avec les électrodes.

Un contact électrique entre l'objet et les électrodes peut être obtenu par électromigration lorsque l'objet est une molécule, ou une ou des particules métalliques (billes d'or par exemple).

Pour résumer, si l'objet est de taille nanométrique comme par exemple une molécule, on utilisera de préférence des électrodes comportant des micropointes, et pour des objets plus grands, comme les nanofils, nanotubes de carbone ou de graphène, des électrodes classiques pourront être utilisées, les électrodes seront alors de préférence agencées pour ne pas gêner la propagation du signal lumineux dans le guide à fente. Les éléments métalliques seuls pourront aussi faire office d'électrodes.

Le coupleur offre une forte efficacité de couplage optique vers un objet de taille nanométrique, en effet, l'onde confinée dans la fente du guide à fente a une concentration cent fois supérieure à la concentration que l'on peut trouver dans l'art antérieur.

## Revendications

1. Dispositif de couplage co-directionnel d'une onde électromagnétique entre

    - un guide d'onde (1) et
    - un guide métallique à fente (2), le guide métallique à fente (2) étant formé par deux éléments métalliques (3a, 3b) coplanaires et espacés l'un de l'autre de sorte à délimiter la fente, et le guide métallique à fente (2) étant disposé dans un plan (P2) décalé par rapport au plan (P1) du guide d'onde (1) et recouvrant partiellement ledit guide d'onde (1), ledit guide d'onde (1) et le guide à fente (2) étant maintenus à distance l'un de l'autre par un diélectrique.

2. Dispositif selon la revendication 1, **caractérisé en ce que** le guide d'onde (1) et le guide métallique à fente (2) sont séparés par un intervalle (Di).

3. Dispositif selon l'une des revendications 1 et 2, **caractérisé en ce que** le guide d'onde (1) et le guide métallique à fente (2) ont des indices effectifs dont le rapport est compris entre 0,8 et 1,2.

4. Dispositif selon l'une quelconque des revendications 1 à 3, **caractérisé en ce que** la longueur de recouvrement ($L_r$) partiel du guide d'onde (1) par le guide métallique à fente (2) est un multiple impair d'une longueur de couplage effectif (Le) entre les deux guides.

5. Dispositif selon l'une quelconque des revendications 1 à 4, **caractérisé en ce que** le guide d'onde étant formé par deux éléments (1a, 1 b), ledit guide métallique à fente (2) est disposé de manière à recouvrir partiellement deux portions proximales desdits éléments (1 a, 1b).

6. Dispositif selon la revendication 5, **caractérisé en ce que** la longueur de recouvrement partiel ($L_{r1}$, $L_{r2}$) du guide d'onde par le guide métallique à fente (2) au niveau de chaque portion est un multiple impair d'une longueur de couplage effectif (Le).

7. Dispositif selon l'une quelconque des revendications 1 à 6, caractérisé en ce les éléments métalliques (3a,3b) forment des électrodes.

8. Dispositif selon la revendication 7, **caractérisé en ce que** la fente (4) est comblée de germanium.

9. Dispositif selon la revendication 7, **caractérisé en ce que** la fente est comblée par un matériau non linéaire ou un matériau à propriétés d'émission ou un matériau à propriétés de modulation.

10. Dispositif selon la revendication 7 **caractérisé en ce que** les éléments métalliques (3a, 3b) comportent chacun au niveau de la fente une micropointe, l'une des micropointes étant orientée vers l'autre micropointe.

11. Procédé de fabrication d'un dispositif de couplage entre un guide d'onde (1) et un guide métallique à fente (2) **caractérisé en ce qu'**il comporte sur un substrat (5) les étapes successives suivantes :

    - former le guide d'onde (1),
    - former une couche de diélectrique (8),
    - former le guide métallique à fente (2) co-directionnel avec le guide d'onde (1) dans un plan décalé par rapport au plan du guide d'onde (1) de sorte que la fente (4) soit délimitée par deux éléments métalliques (3a,3b) coplanaires et que le guide métallique à tente (2) recouvre partiellement le guide d'onde (1), ledit guide d'onde (1) et le guide à fente (2) étant maintenus à distance l'un de l'autre par la couche de diélectrique (8).

12. Procédé selon la revendication 11, **caractérisé en ce que** le guide d'onde (1) est encapsulé, ou recouvert en partie, par un matériau diélectrique (8) dont l'indice de réfraction est compris entre 1 et 2,5, avant la formation du guide à fente (2).

13. Procédé selon l'une des revendications 11 et 12 **caractérisé en ce que** le substrat (5) étant un substrat muni d'une couche de silicium (6) sur isolant (7), le guide d'onde (1) est un guide en silicium délimité par la gravure de la couche en silicium (6) jusqu'à la couche d'isolant (7).

14. Procédé selon la revendication 12, **caractérisé en**

**ce que** la formation du guide métallique à fente (2) est réalisée par les étapes successives suivantes :

    - graver deux cavités (9a, 9b) dans le matériau diélectrique (8) encapsulant ou recouvrant en partie le guide d'onde (1),
    - remplir les deux cavités (9a, 9b) par du métal.

15. Procédé selon la revendication 14, **caractérisé en ce qu'**il comporte entre l'étape de gravure des cavités (9a, 9b) et l'étape de remplissage des cavités (9a, 9b) une étape d'attaque chimique au niveau desdites cavités (9a, 9b).

16. Coupleur électrique et optique d'un objet **caractérisé en ce qu'**il comporte un dispositif de couplage selon la revendication 1, et un élément de couplage électrique muni de deux électrodes disposées au niveau de la fente du guide à fente (2), ledit objet étant en contact avec au moins une des électrodes.

17. Coupleur selon la revendication 16, **caractérisé en ce que** les électrodes sont formées par les éléments métalliques (3a, 3b) du guide à fente (2), et **en ce que** chacun des éléments métalliques (3a,3b) comporte dans la fente les séparant une micropointe (10a, 10b), l'une des micropointes (10a, 10b) étant orientée vers l'autre micropointe (10a,10b).

18. Coupleur selon la revendication 16, **caractérisé en ce que** les éléments métalliques (3a, 3b) du guide à fente sont situés entre le guide d'onde (1) et les électrodes.

**Patentansprüche**

1. Vorrichtung zur kodirektionalen Kopplung einer elektromagnetischen Welle zwischen

    - einem Wellenleiter (1) und
    - einem metallischen Leiter mit Schlitz (2),

    wobei der metallische Leiter mit Schlitz (2) durch zwei metallische Elemente (3a, 3b) gebildet ist, die koplanar und voneinander beabstandet sind, um den Schlitz zu begrenzen, und wobei der metallische Leiter mit Schlitz (2) in einer Ebene (P2), welche gegenüber der Ebene (P1) des Wellenleiters (1) versetzt ist, angeordnet ist und den Wellenleiter (1) teilweise überlappt, wobei der Wellenleiter (1) und der Leiter mit Schlitz (2) durch ein Dielektrikum im Abstand voneinander gehalten sind.

2. Vorrichtung nach Anspruch 1, **dadurch gekennzeichnet, dass** der Wellenleiter (1) und der metallische Leiter mit Schlitz (2) durch einen Zwischenraum (Di) getrennt sind.

3. Vorrichtung nach einem der Ansprüche 1 und 2, **dadurch gekennzeichnet, dass** der Wellenleiter (1) und der metallische Leiter mit Schlitz (2) effektive Indices haben, deren Verhältnis zwischen 0,8 und 1,2 liegt.

4. Vorrichtung nach einem der Ansprüche 1 bis 3, **dadurch gekennzeichnet, dass** die Länge der teilweisen Überlappung ($L_r$) des Wellenleiters (1) durch den metallischen Leiter mit Schlitz (2) ein ungerades Vielfaches einer Länge effektiver Kopplung (Lc) zwischen den beiden Leitern ist.

5. Vorrichtung nach einem der Ansprüche 1 bis 4, **dadurch gekennzeichnet, dass** wenn der Wellenleiter durch zwei Elemente (1a, 1b) gebildet ist, der metallische Leiter mit Schlitz (2) derart angeordnet ist, dass er zwei proximale Abschnitte der Elemente (1a, 1b) teilweise überlappt.

6. Vorrichtung nach Anspruch 5, **dadurch gekennzeichnet, dass** die Länge der teilweisen Überlappung ($L_{r1}$, $L_{r2}$) des Wellenleiters durch den metallischen Leiter mit Schlitz (2) im Bereich eines jeden Abschnitts ein ungerades Vielfaches einer Länge effektiver Kopplung (Lc) ist.

7. Vorrichtung nach einem der Ansprüche 1 bis 6, **dadurch gekennzeichnet, dass** die metallischen Elemente (3a, 3b) Elektroden bilden.

8. Vorrichtung nach Anspruch 7, **dadurch gekennzeichnet, dass** der Schlitz (4) mit Germanium ausgefüllt ist.

9. Vorrichtung nach Anspruch 7, **dadurch gekennzeichnet, dass** der Schlitz durch ein nicht lineares Material oder ein Material mit Emissionseigenschaften oder ein Material mit Modulationseigenschaften ausgefüllt ist.

10. Vorrichtung nach Anspruch 7, **dadurch gekennzeichnet, dass** die metallischen Elemente (3a, 3b) im Bereich des Schlitzes jeweils eine Mikrospitze aufweisen, wobei die eine der Mikrospitzen in Richtung der anderen Mikrospitze gerichtet ist.

11. Verfahren zur Herstellung einer Kopplungsvorrichtung zwischen einem Wellenleiter (1) und einem metallischen Leiter mit Schlitz (2), **dadurch gekennzeichnet, dass** es auf einem Substrat (5) die folgenden aufeinanderfolgenden Schritte umfasst:

    - Ausbilden des Wellenleiters (1),
    - Ausbilden einer Dielektrikum-Schicht (8),
    - Ausbilden des metallischen Leiters mit Schlitz (2), der mit dem Wellenleiter (1) kodirektional ist, in einer gegenüber der Ebene des Wellenleiters (1) versetzten Ebene, so dass der Schlitz (4) durch zwei koplanare metallische Elemente (3a, 3b) begrenzt ist und dass der metallische Leiter mit Schlitz (2) den Wellenleiter (1) teilweise überlappt, wobei der Wellenleiter (1) und der Leiter mit Schlitz (2) durch die Dielektrikum-Schicht (8) im Abstand voneinander gehalten sind.

12. Verfahren nach Anspruch 11, **dadurch gekennzeichnet, dass** der Wellenleiter (1) vor der Ausbildung des Leiters mit Schlitz (2) mit einem dielektrischen Material (8), dessen Brechungsindex im Bereich zwischen 1 und 2,5 liegt, eingekapselt oder teilweise überzogen wird.

13. Verfahren nach einem der Ansprüche 11 und 12, **dadurch gekennzeichnet, dass** wenn das Substrat (5) ein mit einer Silizium-Schicht (6) auf Isolator (7) versehenes Substrat ist, der Wellenleiter (1) ein Siliziumleiter ist, der durch die Ätzung der Siliziumschicht (6) bis zu der Isolatorschicht (7) begrenzt ist.

14. Verfahren nach Anspruch 12, **dadurch gekennzeichnet, dass** die Ausbildung des metallischen Leiters mit Schlitz (2) durch die folgenden aufeinanderfolgenden Schritte vollzogen wird:

    - Ätzen von zwei Vertiefungen (9a, 9b) in das dielektrische Material (8), das den Wellenleiter (1) einkapselt oder teilweise bedeckt,
    - Auffüllen der beiden Vertiefungen (9a, 9b) mit Metall.

15. Verfahren nach Anspruch 14, **dadurch gekennzeichnet, dass** es zwischen dem Schritt des Ätzens der Vertiefungen (9a, 9b) und dem Schritt des Auffüllens der Vertiefungen (9a, 9b) einen Schritt eines chemischen Ätzens im Bereich der Vertiefungen (9a, 9b) umfasst.

16. Elektrischer und optischer Koppler eines Objektes, **dadurch gekennzeichnet, dass** er eine Kopplungsvorrichtung nach Anspruch 1 und ein elektrisches Kopplungselement umfasst, das mit zwei Elektroden, welche im Bereich des Schlitzes des Leiters mit Schlitz (2) angeordnet sind, versehen ist, wobei das Objekt mit wenigstens einer der Elektroden in Kontakt ist.

17. Koppler nach Anspruch 16, **dadurch gekennzeichnet, dass** die Elektroden durch die metallischen Elemente (3a, 3b) des Leiters mit Schlitz (2) gebildet sind und dass ein jedes der metallischen Elemente (3a, 3b) in dem sie trennenden Schlitz eine Mikrospitze (10a, 10b) umfasst, wobei die eine der Mikrospitzen (10a, 10b) in Richtung der anderen Mikrospitze (10a, 10b) gerichtet ist.

**18.** Koppler nach Anspruch 16, **dadurch gekennzeichnet, dass** die metallischen Elemente (3a, 3b) des Leiters mit Schlitz zwischen dem Wellenleiter (1) und den Elektroden gelegen sind.

## Claims

**1.** Device for co-directional coupling an electromagnetic wave including:

- a waveguide (1),
- a slit metal guide (2),

the slit metal guide (2) being formed by two metal elements (3a, 3b) which are coplanar and spaced out from one another so as to delimit the slit, and the slit metal guide (2) being arranged in a plane (P2) offset from the plane (P1) of the waveguide (1) and partially covering said waveguide (1), said waveguide (1) and the slit guide (2) being maintained at a distance from one another by a dielectric.

**2.** Device according to claim 1, **characterized in that** the waveguide (1) and the slit metal guide (2) are separated by an interval (Di).

**3.** Device according to anyone of the claims 1 and 2, wherein **characterized in that** the waveguide (1) and the slit metal guide (2) have effective indices whose ratio lies between 0.8 and 1.2.

**4.** Device according to anyone of the claims 1 to 3, **characterized in that** the partial covering length ($L_r$) of the waveguide (1) by the slit metal guide (2) is an odd multiple of a effective coupling length (Lc) between the two guides.

**5.** Device according to anyone of the claims 1 to 4, **characterized in that**, the waveguide being formed by two elements (1 a, 1 b), said slit metal guide (2) is arranged so as to partially cover two proximal portions of said elements (1 a, 1 b).

**6.** Device according to claim 5, **characterized in that** the partial covering length ($L_{r1}$, $L_{r2}$) of the waveguide by the slit metal guide (2) at each portion is an odd multiple of a effective coupling length (Lc).

**7.** Device according to anyone of the claims 1 to 6, **characterized in** the metal elements (3a, 3b) form electrodes.

**8.** Device according to claim 7, **characterized in that** the slit (4) is filled with germanium.

**9.** Device according to claim 7, **characterized in that** the slit is filled with a nonlinear material or a material with emission properties or a material of modulation properties.

**10.** Device according to claim 7, **characterized in that** each of the metal elements (3a, 3b) comprises at the slit a microtip, one of the microtips being oriented towards the other microtip.

**11.** Method for manufacturing a coupling device between a waveguide (1) and a slit metal guide (2), **characterized in that** it comprises on a substrate (5) the following successive steps:

- forming the waveguide (1),
- forming a dielectric material layer (8),
- forming the slit metal guide (2) so as to be co-directional with the waveguide (1) in a plane offset from the plane of the waveguide (1) so that the slit (4) is delimited by two coplanar metal elements (3a, 3b) and the slit metal guide (2) partially covers the waveguide (1), the waveguide (1) and the slit metal guide (2) being separated from each other by the dielectric material layer (8).

**12.** Method according to claim 11, **characterized in that** the waveguide (1) is encapsulated, or partly covered, by a dielectric material (8) whose refractive index lies between 1 and 2.5 before the formation of the slit guide (2).

**13.** Method according to anyone of the claims 11 and 12, **characterized in that**, as the substrate (5) is a substrate provided with a silicon (6) on insulator layer (7), the waveguide (1) is a silicon guide delimited by etching the silicon layer (6) down to the insulating material layer (7).

**14.** Method according to claim 12, **characterized in that** the formation of the slit metal guide (2) is carried out by the following successive steps:

- etching two cavities (9a, 9b) into the dielectric material (8) encapsulating or partly covering the waveguide (1),
- filling the two cavities (9a, 9b) with metal.

**15.** Method according to the claim 14, **characterized in that**, between the step of etching the cavities (9a, 9b) and the step of filling the cavities (9a, 9b), it comprises a chemical etching step at said cavities (9a, 9b).

**16.** Electric and optical coupler of an object, **characterized in that** it comprises coupler comprises a coupling device according to claim 1, and an electric coupling element provided with two electrodes arranged at the slit of the slit guide (2), said object being in contact with at least one of the electrodes.

17. Coupler according to claim 16, **characterized in that** the electrodes are formed by the metal elements (3a, 3b) of the slit guide (2), and **in that** each metal element (3a, 3b) comprises in the slit thereb0etween a microtip (10a, 10b), one of the microtips (10a, 10b) being oriented towards the other microtip (10a, 10b).

18. Coupler according to claim 16, **characterized in that** the metal elements (3a, 3b) of the slit guide are located between the waveguide (1) and the electrodes.

Figure 1 (Art antérieur)

Figure 2 (Art antérieur)

Figure 3 (Art antérieur)

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Theorical investigation of compact couplers between dielectric slab waveguides and two-dimensional metal-dielectric-metal plasmonic waveguides. *Optic Express,* 05 Février 2007, vol. 15 (3

- Silicon photonics. Wiley, 2004
- **ROELKENS.** *IEEE photonics technologiy letters,* vol. 17 (12